# EUROPEAN PATENT APPLICATION

(11) **EP 1 700 655 A1**
(43) Date of publication of application: **13.09.2006**
(21) Application number: 06004267.8
(22) Date of filing: 02.03.2006
(51) Int. Cl.: B23B 31/117

(54) **Cutting tool holding mechanism and spindle unit**

(30) Priority: 09.03.2005 JP 2005064699
(71) Applicant: Nakanishi Inc., Kanuma-shi, Tochigi 322-8666 (JP)
(72) Inventor: Nakanishi, Takasuke, Kanuma-shi, Tochigi 322-8666 (JP)
(74) Representative: Wehnert, Werner

(57) **Abstract**

The present invention relates to a cutting tool holding mechanism and a spindle unit (20, 30, 70) that allow easy attachment/detachment of a cutting tool (10, 10A, 10B, 80). The spindle unit (20, 30, 70) includes a main shaft(21, 31, 71) rotatably supported in a housing (38, 77) by means of a bearing (36, 37; 76a, 76b), and having in its rear end portion an engaging section (21e, 31e, 71a, 60b, 61b, 62b, 63b) to be engaged with an engaging section (15, 83, 60a, 61a, 62a, 63a) formed on the rear end portion of a cutting tool (10, 10A, 10B, 80) to be inserted into the main shaft (21, 31, 71), an annular elastic member (22, 32, 72) made of rubber or a resin material, and arranged in the main shaft (21, 31, 71) near its front end, a sliding member (23, 33, 73) slidingly arranged in the main shaft (21, 31, 71) to abut to the annular elastic member (22, 32, 72), and a sealing member (24, 34, 74) detachably disposed on the front end portion of the main shaft (21, 31, 71), and capable of pressing the annular elastic member (22, 32, 72) via the sliding member (23, 33, 73).

## Description

### FIELD OF ART

The present invention relates to a cutting tool holding mechanism and a spindle unit, in particular, to a cutting tool holding mechanism and a spindle unit that are applicable to dental instruments, surgical instruments, machine tools, or the like.

### BACKGROUND ART

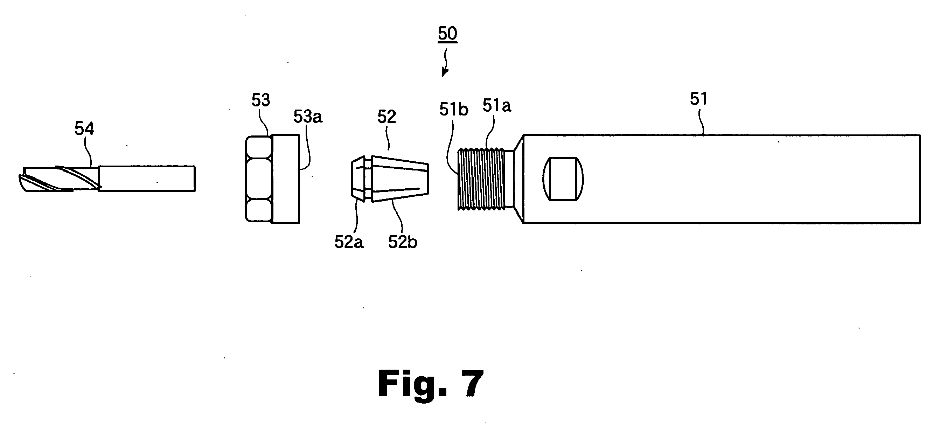

A spindle unit is incorporated and used in various machinery, such as a dental handpiece, a surgical handpiece, and a machine tool. An example of a conventional spindle unit is shown in Fig. 7. Spindle unit 50 includes holder 51 having threads 51a formed on the front end portion thereof and hollow 51b, collet chuck 52 having front and rear tapered surfaces 52a and 52b, and nut 53 to be screwed onto the threads 51a of the holder 51. On the inner periphery 53a of the nut 53, a tapered surface is formed that is complementary to the front tapered surface 52a of the collet chuck 52. On the inner periphery of the holder 51 defining the hollow 51b, a tapered surface is formed that is complementary to the rear tapered surface 52b of the collet chuck 52. Cutting tool 54 is held in the holder 51 by inserting the collet chuck 52 into the hollow 51b of the holder 51, inserting the rear end of the cutting tool 54 into the collet chuck 52, and screwing the nut 53 onto the threads 51a on the front end portion of the holder 51, to press the collet chuck 52 against the cutting tool 54 by means of the holder 51 and the nut 53.

### DISCLOSURE OF THE INVENTION

### PROBLEMS TO BE SOLVED BY THE INVENTION

Such a conventional cutting tool holding mechanism has various drawbacks. The tapered surfaces on the holder and the nut are hard to be formed with precision. Tapered surfaces with insufficient precision may result in insufficient contact with the tapered surfaces of the collet chuck, which may disadvantageously cause shaking, vibration, and wear of the spindle. The collet chuck, the holder, and the nut are usually made of metal, thus gaps tend to be formed between these parts, which allow intrusion of debris. The collet chuck is constrained on its conical surface, so that it tends to slip in the circumferential direction thereof, and cannot hold the cutting tool securely without strong compression by the holder and the nut. Further, upon attachment of the cutting tool, alignment must be adjusted, which adds to the complexity in its attachment/detachment.

The present invention is made in the light of the drawbacks in the prior art. It is therefore an object of the present invention to provide a cutting tool holding mechanism and a spindle unit, wherein the precision of the component parts may be satisfied relatively easily, a gap is hard to form between the parts, and the cutting tool is easily attached and detached.

### MEANS FOR SOLVING THE PROBLEMS

According to the present invention, there is provided a cutting tool holding mechanism for a spindle unit, said spindle unit having a cylindrical main shaft for receiving a cutting tool therein, said main shaft rotatably supported in a housing by means of a bearing, said mechanism comprising:
an engaging section provided in the main shaft, and an engaging section provided on the cutting tool, said engaging sections engaging with each other to prevent relative circumferential movement of the cutting tool in the main shaft,
a step or a small diameter section formed in the middle portion of the cutting tool,
an annular elastic member made of rubber or a resin material, and arranged in a gap formed between the cutting tool and the main shaft so as to face to said step or smaller diameter section,
a sliding member slidingly arranged in said gap so as to abut to said annular elastic member, and
a sealing member detachably disposed on the front end portion of the main shaft, and capable of pressing the annular elastic member via the sliding member,
wherein said annular elastic member, when pressed by the sealing member via the sliding member, is compressed and deformed to be pressed against the step or smaller diameter section of the cutting tool.

As used herein, the cutting tool includes dental treatment tools, surgical treatment tools, tools for machine tools, and the like, and the cutting tool holding mechanism and the spindle unit may be applied to dental apparatuses, surgical apparatuses, machine tools, or the like.

The engaging sections for preventing relative circumferential movement of the cutting tool in the main shaft may be provided by forming the rear end or middle portion of the cutting tool in a form other than a cylinder, such as a cylindrical formhaving one flat face or a polygonal prism form, and by forming in the main shaft a cylindrical portion of a shape complementary to this rear end or middle portion of the cutting tool. With the cutting tool holding mechanism having such engaging sections, when the cutting tool is inserted into and positioned in the main shaft, the rear end or middle portion of the cutting tool engages with the complementary cylindrical portion of the main shaft to prevent relative circumferential movement of the cutting tool in the main shaft, such as free spinning. The precision of the engaging sections is sufficient as long as the engagement between the cutting tool and the main shaft is maintained during rotation of the main shaft. Thus the requirement for the precision is remarkably lowered compared to the conventional products, which facilitates manufacture of the products.

According to the cutting tool holding mechanism of the present invention, when the cutting tool is inserted into and positioned in the main shaft, and the sealing member is screwed on to the front end portion of the main shaft, the slidingmember slides topress the annular elasticmember made of rubber or a resin material, which is elastically deformed to pressure contact with the smaller diameter portion or step of the cutting tool. With this pressure contact of the annular elastic member with the cutting tool, relative movement of the cutting tool in the main shaft, such as axial or circumferential sliding, free spinning, or displacement, may be prevented. The elastic deformation of the annular elastic member closes the gap between the cutting tool and the main shaft to prevent intrusion of debris through this gap. Further, the cutting tool may be attached to or detached from the main shaft by screwing the sealing member on to or out of the front end portion of the main shaft, so that attachment and detachment of the cutting tool is remarkably facilitated compared to the conventional product.

According to the cutting tool holding mechanism of the present invention, the diameter of the cutting tool over its entire length may preferably be smaller than the inner diameters of the sliding member and the sealing member. With this structure, by merely loosening the sealing member, the annular elastic member is released from the pressure contact with the smaller diameter portion or step of the cutting tool, and clearance is formed between the cutting tool and the annular elastic member. Due to this clearance, the cutting tool may be drawn out of the main shaft without the sealing member and the sliding member being completely detached from the main shaft, and thus rapid replacement of the cutting tool is achieved.

According to the present invention, there is also provided a spindle unit comprising:
a main shaft rotatably supported in a housing by means of a bearing, and having in its rear end portion an engaging section to be engaged with an engaging section formed on the rear end portion of a cutting tool to be inserted into the main shaft,
an annular elastic member made of rubber or a resin material, and arranged in the main shaft near its front end,
a sliding member slidingly arranged in the main shaft to abut to the annular elastic member, and
a sealing member detachably disposed on the front end portion of the main shaft, and capable of pressing the annular elastic member via the sliding member.

In this spindle unit, the inner diameters of the sliding member and the sealing member may preferably be larger than the diameter of the cutting tool.

### EFFECT OF THE INVENTION

According to the present invention, the engaging section of the main shaft and the engaging section of the cutting tool engage with each other, and the annular elastic member made of rubber or a resin material is elastically deformed and brought into pressure contact with the smaller diameter portion or step of the cutting tool. Thus relative movement of the cutting tool in the main shaft, such as circumferential movement, including sliding and free spinning, or axial displacement, may be prevented. These parts have no tapered surface, and are generally made in a straight shape, so that the precision is easily satisfied during the manufacture, and shaking, vibration, and wear of the main shaft and the cutting tool may be prevented. Further, the elastic deformation of the annular elastic member closes the gap between the main shaft and the cutting tool, so that a gap is hardly formed between these parts, and intrusion of debris is effectively prevented. In addition, since the cutting tool is constrained uniformly in the whole circumferential direction by means of the annular elastic member, aligning effect is also given.

### BRIEF DESCRIPTION OF THE DRAWINGS

Figs. 1 (a) to 1 (e) are explanatory views illustrating the principal portion of an embodiment of the spindle unit according to the present invention.
Figs. 2(a) and 2(b) are side views each illustrating a cutting tool different from Fig. 1(a).
Fig. 3 is a partially enlarged view of Fig. 1(e).
Figs. 4 (a) to 4(d) are sectional views seen from the rear end, each illustrating a different embodiment of the engaging sections of a cutting tool and a main shaft.
Fig. 5 is a sectional view of an embodiment of the spindle unit according to the present invention.
Fig. 6 is a sectional view of another embodiment of the spindle unit according to the present invention, different from Fig. 5.
Fig. 7 is an explanatory view of a conventional spindle unit.

### PREFERRED EMBODIMENTS OF THE INVENTION

The present invention will now be explained with reference to preferred embodiments of the invention taken in conjunction with the attached drawings.

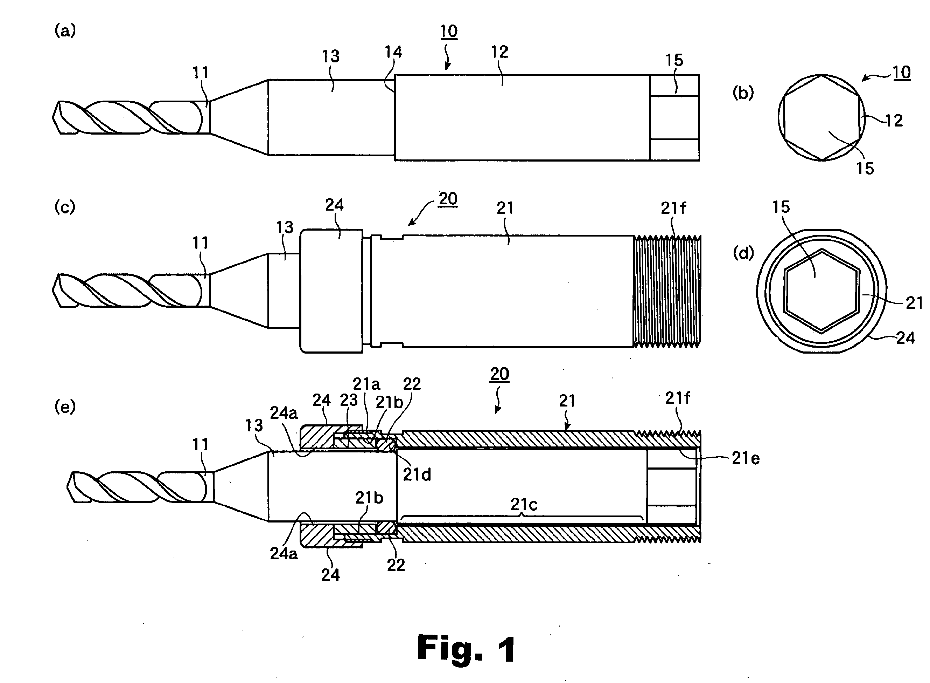

Fig. 1 is an explanatory view of the principal portion of the spindle unit according to the present invention. Fig. 1(a) is a side view of cutting tool 10, and Fig. 1 (b) is a rear end view of the cutting tool 10.

The cutting tool 10 may be any tool that is incorporated and used in an apparatus, such as a machine tool. The cutting tool 10 has cutting blade 11 formed on the front end of the shank for cutting a work piece. Contiguous to the cutting blade 11, smaller diameter section 13 is formed in the front end portion of the shank. The smaller diameter section 13 has a diameter smaller than that of larger diameter section 12, which is relatively thicker than the smaller diameter section 13. Step 14 is formed between the smaller diameter section 13 and the larger diameter section 12. Polygonal prism section 15 is formed in the rear end portion of the shank. The polygonal prism section 15 may be, for example, in the form of a hexagonal prism, like a bolt head.

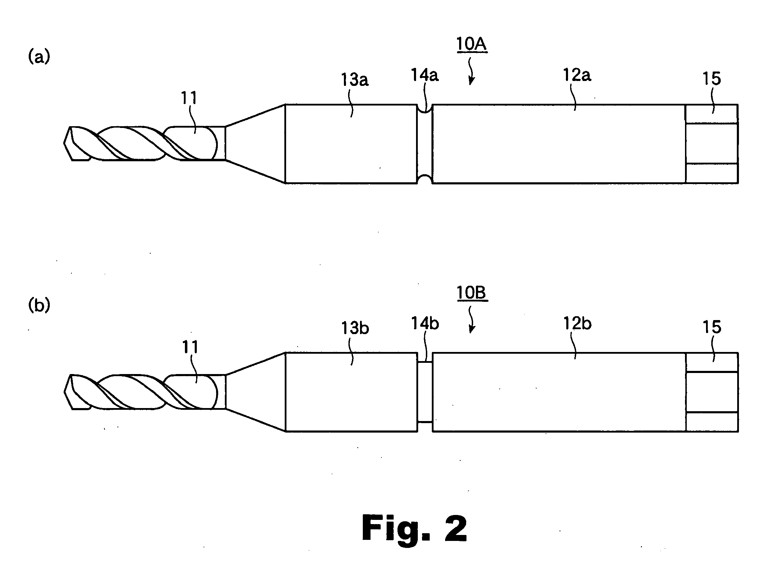

The larger diameter section 12, the smaller diameter section 13, and the step 14 of the cutting tool 10 may also be in any forms other than those shown in Fig. 1(a). That is, Fig. 2 (a) shows cutting tool 10A having smaller diameter section 14a, which is formed between shank sections 12a and 13a, and is in the form of a groove having a semicircular cross-section. Fig. 2(b) shows cutting tool 10B having smaller diameter section 14b, which is formed between shank sections 12b and 13b, and is in the form of a groove having a rectangular cross-section.

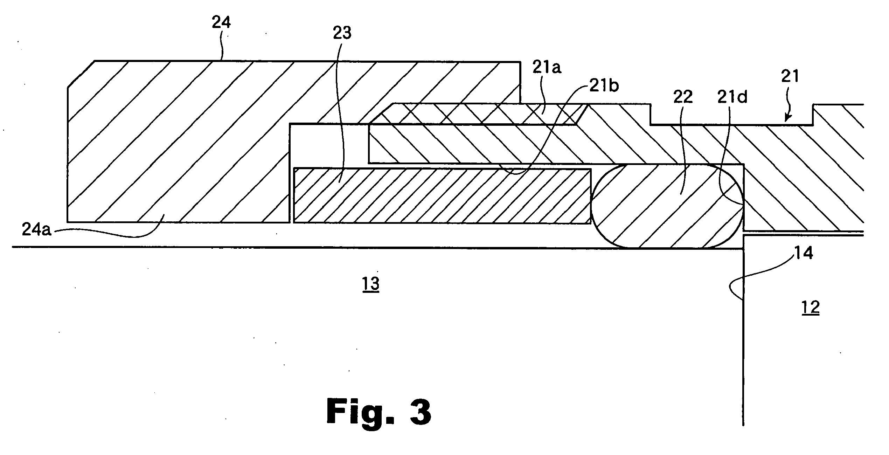

Fig. 1 (c) is a side view of the principal portion 20 of a spindle unit, Fig. 1 (d) is a rear end view thereof, Fig. 1 (e) is a sectional view thereof, and Fig. 3 is a partially enlarged view of Fig. 1 (e).

The principal portion of the spindle unit includes main shaft 21, annular elastic member 22, sliding member 23, and sealing nut 24.

The main shaft 21 is in a cylindrical form for receiving the cutting tool 10 therein. In the front end portion of the main shaft 21, threads 21a are formed on its outer surface, and larger inner diameter section 21b having an inner diameter relatively larger than the other portion is formed on its inner surface. At the rear of the larger inner diameter section 21b is smaller inner diameter section 21c, with step 21d formed between the larger and smaller inner diameter sections 21b and 21c. In the rear end portion of the main shaft 21, polygonal cylinder section 21e is formed inside, and threads 21f are formed on the outer surface. These threads 21f are optional, and the outer surface of the rear end portion may be a smooth surface.

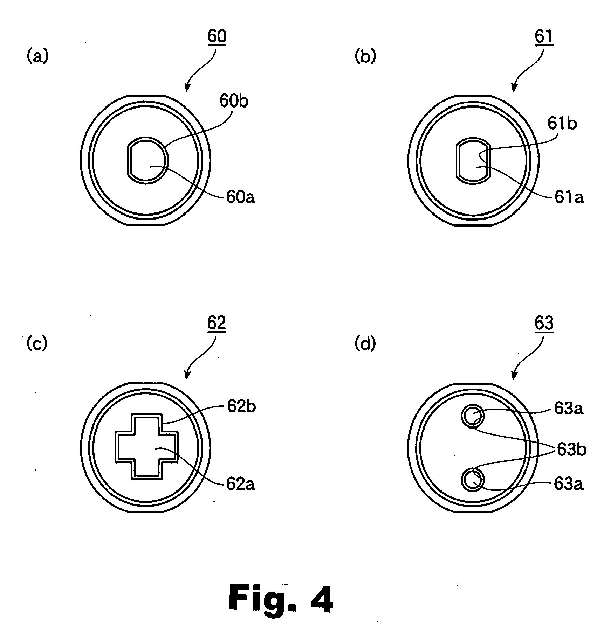

In the embodiments discussed above, engaging sections of the cutting tool 10 and the main shaft 21 are formed by providing the polygonal prism section 15 at the rear end of the shank of the cutting tool 10 and providing the polygonal cylinder section 21e at the rear end of the main shaft 21. However, the engaging sections may alternatively be formed as engaging sections 60 to 63 as shown in Figs. 4(a) to 4(d). Specifically, cylindrical body 60a having one flat face, cylindrical body 61a having two opposed flat faces, axial body 62a having a cross shaped cross-section, or axial body or bodies 63a extending from one or a plurality of locations, are provided at the rear end of the shank, and a cylindrical section 60b to 63b having a complementary shape to be engaged with the rear end of the cutting tool is provided at the rear end of the main shaft, to thereby form the engaging sections 60 to 63.

The annular elastic member 22 is made of a material that is elastically deformable by external force, such as rubber or resin materials. The sliding member 23 is an annular member, and has an outer diameter that allows insertion of the sliding member 23 into the larger inner diameter section 21b of the main shaft 21, and an inner diameter that allows sliding engagement around the smaller diameter section 13 of the cutting tool 10 and is larger than the larger diameter section 12 of the cutting tool 10. The sealing nut 24 screws on the threads 21a on the frond end portion of the main shaft 21, and has annular inner protrusion 24a protruding radially inwards to provide a surface on which the sliding member 23 abuts, and having an inner diameter larger than the diameter of the larger diameter section 12 of the cutting tool 10.

As shown in Fig. 1 (e) and Fig. 3, when the cutting tool 10 is inserted into and positioned in the main shaft 21, the steps 14 and 21d are generally aligned with each other, and a gap is formed between the smaller diameter section 13 of the cutting tool 10 and the larger inner diameter section 21b of the main shaft 21. The annular elastic member 22 is arranged in the gap to abut to the steps 14 and 21d, and the sliding member 23 is arranged in the gap to abut to the annular elastic member 22. The sealing nut 24 is screwed onto the threads 21a in the front end portion of the main shaft 21, so that the inner protrusion 24a abuts to the sliding member 23. Thus, the sealing nut 24, being screwed, slides the sliding member 23, which in turn presses the annular elastic member 22 to elastically deform. By this elastic deformation, the annular elastic member 22 protrudes radially inwardly to pressure contact with the smaller diameter portion 13 and the step 14 of the cutting tool 10, to thereby prevent axial and circumferential movements of the cutting tool 10.

In reverse, when the sealing nut 24 is loosened, the annular elastic member 22 is released from the pressure contact with the smaller diameter portion 13 and the step 14 of the cutting tool 10, and clearance is formed between the cutting tool 10 and the annular elastic member 22. Since the diameters of the larger and smaller diameter portions 12 and 13 of the cutting tool 10 are smaller than the inner diameters of the sliding member 23 and the sealing nut 24, the cutting tool 10 may be drawn out of the main shaft 21 without the sliding member 23 and the sealing nut 24 being completely detached from the main shaft 21. Accordingly, the cutting tool 10 may be replaced rapidly.

When the cutting tool 10 is inserted into and positioned in the main shaft 21, the polygonal prism section 15 of the tool 10 engages with the polygonal cylinder section 21e of the main shaft 21, so that relative circumferential movement of the cutting tool 10 in the main shaft 21, such as free spinning, is prevented.

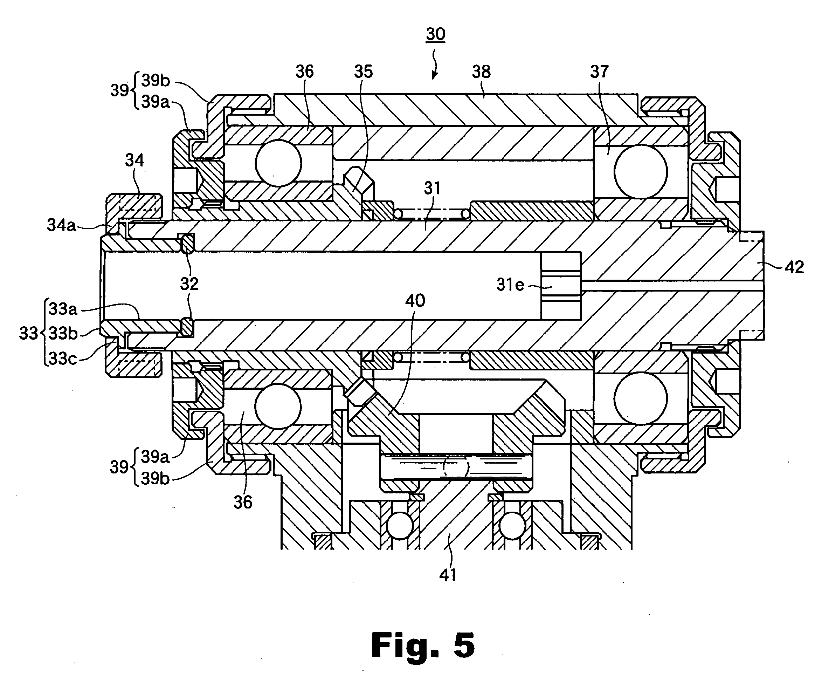

Fig. 5 shows the spindle unit according to the present invention incorporated in a surgical handpiece. While the principal portion of the embodiment of Fig. 5 is composed of the same elements as those of Fig. 1, some members are formed in slightly different shapes. Specifically, the principal portion of spindle unit 30 in Fig. 5 is composed of main shaft 31, annular elastic member 32, sliding member 33, and sealing nut 34, and is generally the same as the principal portion of the spindle unit in Fig. 1, except for the shape of the sliding member 33 and the manner of engagement between the sliding member 33 and the sealing nut 34.

The sliding member 33 is an annular member having an inner diameter that allows insertion of a cutting tool (not shown) therein. The sliding member 33 has insert portion 33a to be inserted into the larger inner diameter section of the main shaft 31, outer projection 33b axially extending out of the main shaft 31, and flange portion 33c to be engaged with inward protrusion 34a of the sealing nut 34.

In the spindle unit 30 of Fig. 5 having such a structure, when the sealing nut 34 is screwed onto the main shaft 31, the inward protrusion 34a abuts to the flange portion 33c of the sliding member 33, and pushes the sliding member 33 into the main shaft 31. The sliding member 33, in turn, presses the annular elastic member 32 to elastically deform it. By this elastic deformation, the annular elastic member 32 protrudes radially inwardly to pressure contact with the smaller diameter portion and the step of the cutting tool, to thereby prevent axial and circumferential sliding and free spinning of the cutting tool.

In reverse, when the sealing nut 34 is loosened, the cutting tool may be drawn out of the main shaft 31 without the sealing nut 34 being completely detached from the main shaft 31. Accordingly, the cutting tool 10 may be replaced rapidly, as with the embodiment of Fig. 1.

Similarly to the embodiment of Fig. 1, also in the spindle unit 30, when the cutting tool is inserted into and positioned in the main shaft 31, the polygonal prism section of the tool engages with the polygonal cylinder section 31e of the main shaft 31, so that relative circumferential movement of the cutting tool in the main shaft 31, such as free spinning, is prevented.

The structure of the spindle unit of Fig. 5 other than its principal portion is briefly explained. The main shaft 31 is supported in housing 38 by means of front and rear bearings 36 and 37, which are sealed with bearing seal caps 39. Main shaft-side gear 35 is fixed on the outer surface of the main shaft 31, and drive-side gear 40 is arranged to mesh with the main shaft-side gear 35. The drive-side gear 40 is rotated by the power transmitted from a drive section (not shown) via drive shaft 41. Each of the front and rear bearing seal caps 39 is composed of rotary cap 39a fixed to the main shaft 31, and stationary cap 39b fixed to the housing 38. The caps 39a and 39b are arranged with a gap therebetween, which provides a dust preventive labyrinth for preventing intrusion of dust into the bearing. The rear end of the main shaft 31 is sealed with axial member 42.

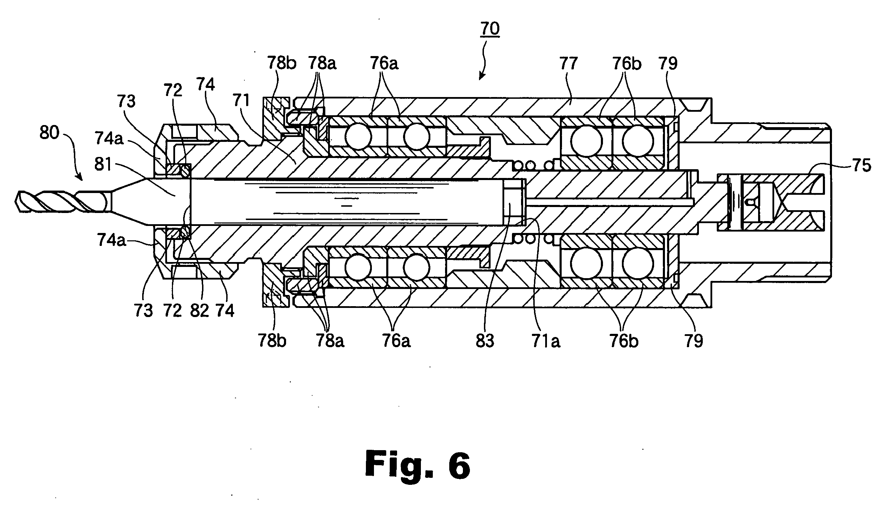

Fig. 6 shows the spindle unit according to the present invention having a structure for incorporation in a machine tool. While the principal portion of the embodiment of Fig. 6 is composed of the same elements as those of Fig. 1, some members are formed in slightly different shapes and sizes. The principal portion of spindle unit 70 in Fig. 6 is composed of main shaft 71, annular elastic member 72, sliding member 73, and sealing nut 74. In the spindle unit 70, when the sealing nut 74 is screwed onto the main shaft 71, the inward protrusion 74a of the nut 74 abuts to the sliding member 73, and pushes it into the main shaft 71. The sliding member 73, in turn, presses the annular elastic member 72 to elastically deform it. By this elastic deformation, the annular elastic member 72 protrudes radially inwardly to pressure contact with the smaller diameter portion 81 and the step 82 of the cutting tool 80, to thereby prevent axial and circumferential sliding and free spinning of the cutting tool 80.

In reverse, when the sealing nut 74 is loosened, the cutting tool 80 may be drawn out of the main shaft 71 without the sealing nut 74 being completely detached from the main shaft 71. Accordingly, the cutting tool 80 may be replaced rapidly, as with the embodiments of Figs. 1 and 5.

Similarly to the above embodiments, also in the spindle unit 70, the polygonal prism section 83 of the cutting tool 80 engages with the polygonal cylinder section 71a of the main shaft 71, so that relative circumferential movement of the cutting tool 80 in the main shaft 71, such as free spinning, is prevented.

The structure of the spindle unit 70 of Fig. 6 other than its principal portion is briefly explained. On the rear end of the main shaft 71 is provided linking member 75, to which a drive unit (not shown) is connected to rotate the main shaft 71 by means of the power transmitted from a drive section (not shown) . The main shaft 71 is rotatably supported in housing 77 by means of front and rear bearings 76a and 76b. The front bearing 76a is sealed with bearing fixing members 78a and bearing seal cap 78b, whereas the rear bearing 76b is sealed with bearing fixing member 79. The bearing fixing members 78a and the bearing seal cap 78b are arranged with a gap therebetween, which provides a dust preventive labyrinth for preventing intrusion of dust into the bearing.

## Claims

1. A cutting tool holding mechanism for a spindle unit (20, 30, 70), said spindle unit having a cylindrical main shaft (21, 31, 71) for receiving a cutting tool (10, 10A, 10B, 80) therein, said main shaft rotatably supported in a housing (38, 77) by means of a bearing (36, 37; 76a, 76b), said mechanism comprising:
an engaging section (21e, 31e, 71a, 60b, 61b, 62b, 63b) provided in the main shaft (21, 31, 71), and an engaging section (15, 83, 60a, 61a, 62a, 63a) provided on the cutting tool (10, 10A, 10B, 80), said engaging sections engaging with each other to prevent relative circumferential movement of the cutting tool (10, 10A, 10B, 80) in the main shaft (21, 31, 71),
a step (14, 82) or a smaller diameter section (13, 14a, 14b, 81) formed in the middle portion of the cutting tool (10, 10A, 10B, 80),
an annular elastic member (22, 32, 72) made of rubber or a resin material, and arranged in a gap formed between the cutting tool (10, 10A, 10B, 80) and the main shaft (21, 31, 71) so as to face to said step (14, 82) or smaller diameter section (13, 14a, 14b, 81),
a sliding member (23, 33, 73) slidingly arranged in said gap so as to abut to said annular elastic member (22, 32, 72), and
a sealing member (24, 34, 74) detachably disposed on the front end portion of the main shaft (21, 31, 71), and capable of pressing the annular elastic member (22, 32, 72) via the sliding member (23, 33, 73),
wherein said annular elastic member (22, 32, 72), when pressed by the sealing member (24, 34, 74) via the sliding member (23, 33, 73), is compressed and deformed to be pressed against the step (14, 84) or smaller diameter section (13, 14a, 14b, 81) of the cutting tool (10, 10A, 10B, 80).

2. The cutting tool holding mechanism of claim 1, wherein the diameter of the cutting tool (10, 10A, 10B, 80) over its length is smaller than the inner diameters of the sliding member (23, 33, 73) and the sealing member (24, 34, 74).

3. A spindle unit (20, 30, 70) comprising:
a main shaft (21, 31, 71) rotatably supported in a housing (38, 77) by means of a bearing (36, 37; 76a, 76b), and having in its rear end portion an engaging section (21e, 31e, 71a, 60b, 61b, 62b, 63b) to be engaged with an engaging section (15, 83, 60a, 61a, 62a, 63a) formed on the rear end portion of a cutting tool (10, 10A, 10B, 80) to be inserted into the main shaft (21, 31, 71),
an annular elastic member (22, 32, 72) made of rubber or a resin material, and arranged in the main shaft (21, 31, 71) near its front end,
a sliding member (23, 33, 73) slidingly arranged in the main shaft (21, 31, 71) to abut to the annular elastic member (22, 32, 72), and
a sealing member (24, 34, 74) detachably disposed on the front end portion of the main shaft (21, 31, 71), and capable of pressing the annular elastic member (22, 32, 72) via the sliding member (23, 33, 73).

4. The spindle unit of claim 3, wherein the inner diameters of the sliding member (23, 33, 73) and the sealing member (24, 34, 74) are larger than the diameter of the cutting tool (10, 10A, 10B, 80).
